# FASCICULE DE BREVET EUROPEEN

(11) **EP 1 567 405 B1**
(45) Date de publication et mention de la délivrance du brevet: **14.09.2011**
(21) Numéro de dépôt: 03796130.7
(22) Date de dépôt: 02.12.2003
(51) Int. Cl.: B62D 25/04

(54) **ENSEMBLE DE CARROSSERIE POUR VEHICULE AUTOMOBILE ET EN PARTICULIER JONCTION DES STRUCTURES CÔTE DE CAISSE ET PAVILLON**
FAHRZEUGKAROSSERIEANORDNUNG UND INSBESONDERE VERBINDUNG DER DACH- UND SEITENRAHMENSTRUKTUR
MOTOR VEHICLE BODY ASSEMBLY PARTICULARTLY THE JUNCTION OF BODY SIDE UPPER RAIL AND UPPER CROSS MEMBER SUPPORTING THE WINDSHIELD

(30) Priorité: 03.12.2002 FR 0215202
(43) Date de publication de la demande: 31.08.2005
(73) Titulaire: Renault s.a.s., 92100 Boulogne Billancourt (FR)
(72) Inventeur: GUILLEMOT, Claude, F-92160 Antony (FR); SANTANDREU, Pascal, F-78125 Emance (FR); STEPHAN, Jean-Luc, F-78550 Richebourg (FR)
(86) Numéro de dépôt international: PCT/FR2003/003552
(87) Numéro de publication internationale: WO 2004/052707

(56) Documents cités:
- EP-A- 1 024 073
- EP-A- 1 153 819
- DE-A- 10 061 309
- US-B1- 6 254 174
- PATENT ABSTRACTS OF JAPAN vol. 2002, no. 10, 10 octobre 2002 (2002-10-10) & JP 2002 178951 A (SUZUKI MOTOR CORP), 26 juin 2002 (2002-06-26)

## Description

### DOMAINE TECHNIQUE

La présente invention se rapporte à un ensemble de carrosserie pour véhicule automobile, et plus précisément à un ensemble de carrosserie comportant un côté de caisse, une doublure de montant de baie, une doublure d'arc pavillon, ainsi qu'un support de traverse avant de pavillon.

D'autre part, l'invention se rapporte également à un véhicule automobile comportant au moins un tel ensemble.

### ETAT DE LA TECHNIQUE ANTERIEURE

Dans ce domaine technique, plusieurs réalisations ont déjà été proposées.

Parmi ces réalisations de l'art antérieur, on connaît un assemblage élémentaire de carrosserie pour véhicule automobile, décrit dans le document FR-A- 2 808 760. Cet assemblage comprend tout d'abord un côté de caisse ainsi qu'une doublure d'arc pavillon et une doublure de montant de baie, ces deux derniers éléments étant formés par une pièce unique de doublure.

Par ailleurs, la pièce unique de doublure et le côté de caisse forment ensemble un corps creux se raccordant à une traverse avant de pavillon, par l'intermédiaire d'une liaison nodale assurée par un gousset présentant un décrochement de surface, destiné à coopérer avec une face interne de la pièce unique de doublure.

Avec une telle configuration, l'assemblage dispose alors d'une surface externe frontale lisse définie par le gousset et le côté de caisse, cette surface étant alors adaptée pour recevoir le pare-brise du véhicule.

Ainsi, dans cet assemblage de l'art antérieur, la surface externe frontale lisse est réalisée sans que la pièce unique de doublure ne requière de décrochement. De cette façon, l'absence de décrochement sur cette pièce unique se traduit directement par une absence d'amorce de flambage susceptible de fragiliser l'assemblage vis-à-vis d'un choc frontal entraînant un effort de compression de cet assemblage.

Néanmoins, il est indiqué que même si le problème lié à l'amorce de flambage de la pièce unique de doublure semble résolu avec cet agencement spécifique, celui-ci n'est pas pour autant totalement satisfaisant en termes de résistance aux diverses sollicitations mécaniques que peut rencontrer le véhicule, telles que celles provoquées par un choc extérieur quelconque.

En effet, le gousset de l'assemblage, dont une des principales fonctions est de supporter la traverse avant de pavillon, nécessite un décrochement de surface afin d'épouser la pièce unique de doublure, et de participer simultanément à la création de la surface externe frontale lisse propre à recevoir le pare-brise. Ainsi, la carrosserie présente une zone mécaniquement fragilisée au niveau du décrochement prévu sur le gousset de l'assemblage, et n'est donc pas totalement compatible avec la nécessité permanente de présenter des véhicules automobiles de conception toujours plus performante sur le plan de la sécurité.

On connaît également du document EP1024073 un ensemble conforme au préambule de la revendication 1.

### EXPOSÉ DE L'INVENTION

L'invention a donc pour but de proposer un ensemble pour véhicule automobile, l'ensemble comportant un côté de caisse et une doublure unique de montant de baie et d'arc pavillon formant un corps creux avec le côté de caisse, l'ensemble comprenant en outre un support de traverse avant de pavillon raccordé au corps creux, et remédiant au moins partiellement à l'inconvénient mentionné ci-dessus relatif aux réalisations de l'art antérieur.

Le but de l'invention est également de présenter un véhicule automobile comportant au moins un ensemble de carrosserie tel que celui répondant au but mentionné ci-dessus.

Pour ce faire, l'invention a tout d'abord pour objet un ensemble de carrosserie pour véhicule automobile, tel que décrit dans la revendication 1. Avantageusement, l'invention est conçue de telle sorte que la résistance mécanique globale de l'ensemble de la carrosserie est largement accrue par rapport aux réalisations présentées dans l'art antérieur. Effectivement, la conception de l'ensemble de carrosserie selon l'invention est telle que le côté de caisse est apte à présenter une surface externe frontale lisse susceptible de recevoir le pare-brise du véhicule, sans pour autant que cet ensemble ne requière de décrochement.

De façon préférentielle, on peut prévoir que l'ensemble de carrosserie comporte de plus au moins une équerre de rigidification, chaque équerre étant solidaire d'une part du support de la traverse avant de pavillon, et d'autre part de la doublure unique de baie et d'arc pavillon.

Enfin, l'invention a également pour objet un véhicule automobile comportant au moins un ensemble de carrosserie tel que celui décrit ci-dessus, et comportant de préférence deux de ces ensembles, disposés respectivement de chaque côté du véhicule, et une traverse avant de pavillon, ces deux ensembles étant reliés par l'intermédiaire de la traverse avant de pavillon.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'un véhicule automobile,
- la figure 2 représente une vue éclatée en perspective d'un ensemble de carrosserie pour véhicule automobile, selon un mode de réalisation préféré de la présente invention, et
- la figure 3 représente une vue en coupe prise le long de la ligne III-III de la figure 2.

### EXPOSÉ DÉTAILLÉ D'UN MODE DE RÉALISATION PRÉFÉRÉ

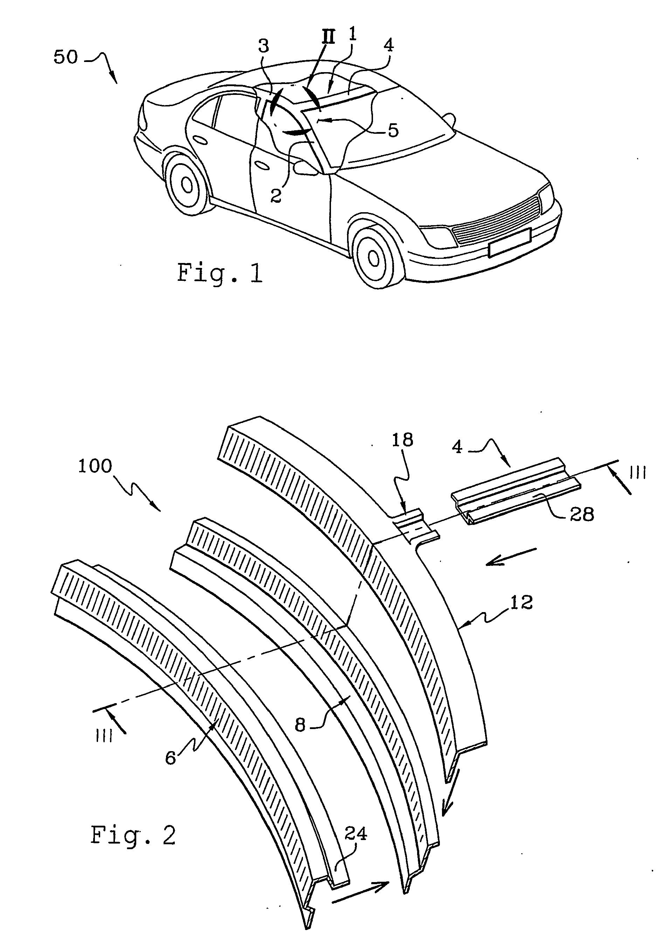

En référence à la figure 1, on voit un véhicule automobile référencé de façon générale par la référence numérique 50, ce véhicule 50 disposant d'une carrosserie référencée de façon générale par la référence numérique 1.

La carrosserie 1 comporte notamment un montant de baie 2, un arc de pavillon 3, ainsi qu'une traverse avant de pavillon 4, ces trois éléments définissant une zone 5 de la carrosserie 1 dans laquelle se situe l'ensemble de carrosserie selon l'invention.

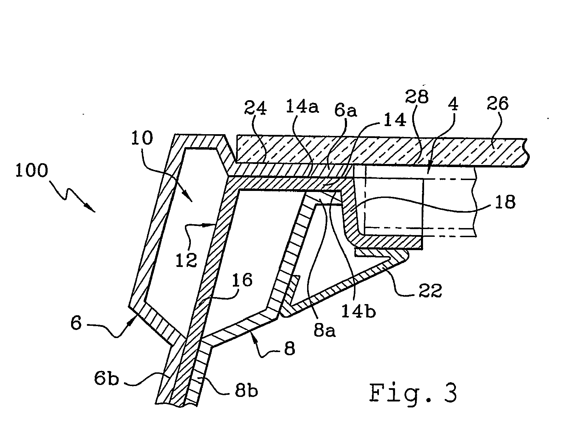

En se référant à présent conjointement aux figures 2 et 3, on voit un ensemble de carrosserie 100 pour véhicule automobile, selon un mode de réalisation préféré de la présente invention.

L'ensemble 100 comporte un côté de caisse 6 ainsi qu'une doublure unique 8 de montant de baie et d'arc pavillon. Comme ceci est visible sur la figure 3, lorsqu'ils sont assemblés, le côté de caisse 6 et la doublure unique 8 forment un corps creux 10.

Par ailleurs, l'ensemble de carrosserie 100 est également muni d'un renfort 12 s'étendant tout le long de la doublure unique 8, et étant fixé entre le côté de caisse 6 et la doublure 8 de l'ensemble 100.

Ce renfort 12 comporte une portion centrale 14, comprenant une surface supérieure 14a ainsi qu'une surface inférieure 14b, cette dernière étant opposée à la surface supérieure 14a et sensiblement parallèle à celle-ci.

Comme on peut le voir sur la figure 3, la surface supérieure 14a épouse une portion supérieure 6a du côté de caisse 6, tandis que la surface inférieure 14b épouse une portion supérieure 8a de la doublure unique 8. En d'autres termes, la portion centrale 14 du renfort 12 est prise en sandwich sur toute sa longueur entre les deux portions supérieures 6a et 8a sensiblement parallèles, appartenant respectivement au côté de caisse 6 et à la doublure unique 8 de l'ensemble 100. D'autre part, outre la coopération indirecte entre les portions supérieures 6a et 8a du côté de caisse 6 et de la doublure unique 8, il est noté que le corps creux 10 est obtenu en assemblant également fixement deux portions inférieures 6b et 8b disposées sensiblement parallèlement l'une par rapport à l'autre, et appartenant respectivement au côté de caisse 6 et à la doublure unique 8.

En outre, le renfort 12 est muni d'une première portion latérale 16 solidaire de la portion centrale 14, et située à l'intérieur du corps creux 10 formé par le côté de caisse 6 et la doublure unique 8.

Pour assurer une bonne résistance mécanique de l'ensemble 100, la première portion latérale 16 peut préférentiellement s'étendre de manière à traverser le corps creux 10 et à être fixée entre les deux portions inférieures 6b et 8b du côté de caisse 6 et de la doublure unique 8. Il est également précisé que la première portion latérale 16 s'étend sur sensiblement toute la longueur de la portion centrale 14, de préférence de façon à former un angle légèrement supérieur à 90 avec celle-ci.

Enfin, le renfort 12 comporte une seconde portion latérale 18, opposée à la première portion latérale 16 par rapport à la portion centrale 14, et s'étendant extérieurement au corps creux 10, en direction de l'habitacle (non représenté) du véhicule.

Cette seconde portion latérale 18 est également solidaire de la portion centrale 14 et sensiblement centrée par rapport à celle-ci, et est constituée par un support destiné à recevoir la traverse avant de pavillon 4. Ainsi, le support 18 permet de raccorder la traverse avant de pavillon 4 au corps creux 10 de l'ensemble 100.

Le support 18 de la traverse avant pavillon 4 dispose préférentiellement d'une géométrie dont la section prend sensiblement la forme d'un U, cette géométrie étant par ailleurs complémentaire de la géométrie de la traverse avant de pavillon 4, avec laquelle le support 18 est destiné à coopérer.

Par ailleurs, comme on peut l'apercevoir sur les figures 2 et 3, une surface extérieure 24 de la portion supérieure 6a du côté de caisse 6 peut alors facilement constituer une partie de la surface externe frontale lisse sur laquelle un pare-brise 26 est apte à être monté ou collé. De plus, la surface externe frontale lisse est également constituée par une surface supérieure 28 de la traverse avant de pavillon 4, cette traverse 4 et le côté de caisse 6 étant agencés de sorte que leurs surfaces respectives 24 et 28 soient situées à proximité l'une de l'autre, de manière à être quasiment continues. De cette façon, le support 18 ne présentant pas de surface destinée à constituer une partie de la surface externe frontale lisse, il n'est par conséquent pas nécessaire de prévoir de décrochement sur la doublure unique 8, ni sur aucun autre élément de l'ensemble de carrosserie 100.

Afin de consolider la liaison mécanique entre la portion centrale 14 et le support 18 du renfort 12 réalisé d'une seule pièce, par exemple par emboutissage et pliage, l'ensemble 100 peut comprendre une ou plusieurs équerres de rigidification 22, chaque équerre 22 étant solidaire d'une part du support 18 de la traverse avant de pavillon 4, et d'autre part de la doublure unique 8 de baie et d'arc pavillon.

Bien entendu, diverses modifications peuvent être apportées par l'homme du métier à l'ensemble de carrosserie 100 qui vient d'être décrit, uniquement à titre d'exemple non limitatif, l'invention restant définie par les revendications.

## Revendications

1. Ensemble de carrosserie (100) pour véhicule automobile (50), l'ensemble comportant :
- un côté de caisse (6),
- une doublure unique (8) de montant de baie et d'arc pavillon formant un corps creux (10) avec ledit côté de caisse (6),
- un support (18) de traverse avant de pavillon (4) raccordé audit corps creux (10) qui fait partie intégrante d'un renfort (12) s'étendant tout le long de la doublure unique (8) et étant fixé entre le côté de caisse (6) et ladite doublure (8) de l'ensemble (100)
**caractérisé en ce que** le renfort (12) est constitué dans sa section transversale d'une portion centrale (14) comportant deux surfaces opposées (14a, 14b) épousant respectivement le côté de caisse (6) et la doublure unique (8), d'une première portion latérale (16) située à l'intérieur du corps creux (10) formé par le côté de caisse (6) et la doublure unique (8), et d'une seconde portion latérale (18) opposée à ladite première portion latérale (16) et s'étendant extérieurement au corps creux (10), ladite seconde portion latérale (18) constituant le support direct de la traverse avant de pavillon (4).

2. Ensemble de carrosserie (100) selon la revendication 1 , **caractérisé en ce qu'**il comporte de plus au moins une équerre de rigidification (22), chaque équerre (22) étant solidaire d'une part du support (18) de la traverse avant de pavillon (4), et d'autre part de la doublure unique (8) de baie et d'arc pavillon.

3. Véhicule automobile (50) **caractérisé en ce qu'**il comporte au moins un ensemble de carrosserie (100) selon l'une quelconque des revendications précédentes.

4. Véhicule automobile (50) selon la revendication 3, **caractérisé en ce qu'**il comporte deux ensembles de carrosserie (100) disposés respectivement de chaque côté du véhicule et une traverse avant de pavillon (4), lesdits deux ensembles (100) étant reliés par l'intermédiaire de la traverse avant de pavillon (4).

## Claims

1. Bodywork assembly (100) for a motor vehicle (50), the assembly comprising:
- a body side (6),
- a single A-pillar and roof rail lining (8) which with the said body side (6) forms a hollow body (10),
- a windscreen header (4) support (18) connected to the said hollow body (10) which forms an integral part of a reinforcement (12) extending all the way along the single lining (8) and being fixed between the body side (6) and the said lining (8) of the assembly (100),
**characterized in that** the reinforcement (12) is made up in its cross section of a central portion (14) comprising two opposite surfaces (14a, 14b) that respectively follow the shape of the body side (6) and the single lining (8), of a first lateral portion (16) situated inside the hollow body (10) formed by the body side (6) and the single lining (8), and of a second lateral portion (18) opposite the said first lateral portion (16) and extending outside the hollow body (10), the said second lateral portion (18) constituting the direct support for the windscreen header (4).

2. Bodywork assembly (100) according to Claim 1, **characterized in that** it additionally comprises at least one stiffening bracket (22), each bracket (22) being secured firstly to the windscreen header (4) support (18) and secondly to the single A-pillar and roof rail lining (8).

3. Motor vehicle (50), **characterized in that** it comprises at least one bodywork assembly (100) according to any one of the preceding claims.

4. Motor vehicle (50) according to Claim 3, **characterized in that** it comprises two bodywork assemblies (100) positioned one on each side of the vehicle and a windscreen header (4), the said two assemblies (100) being connected by means of the windscreen header (4).

## Patentansprüche

1. Karosserieanordnung (100) für ein Kraftfahrzeug (50), wobei die Anordnung Folgendes umfasst:
- eine Karosserieseite (6),
- eine einzige Fensterholm- und Dachbogenauskleidung (8), die einen Hohlkörper (10) mit der Karosserieseite (6) bildet,
- einen Träger (18) für den vorderen Dachquerträger (4), der mit dem Hohlkörper (10) verbunden ist und einen integralen Teil einer Verstärkung (12) bildet, die sich entlang der einzigen Auskleidung (8) erstreckt und zwischen der Karosserieseite (6) und der Auskleidung (8) der Anordnung (100) befestigt ist,
**dadurch gekennzeichnet, dass** die Verstärkung (12) in ihrem Querprofil durch einen mittleren Teil (14), der zwei einander gegenüberliegende Flächen (14a, 14b) enthält, die sich an die Karosserieseite (6) bzw. die einzige Auskleidung (8) anschmiegen, einen ersten lateralen Teil (16), der sich im Inneren des durch die Karosserieseite (6) und die einzige Auskleidung (8) gebildeten Hohlkörpers (10) befindet, und einen zweiten lateralen Teil (18), der dem ersten lateralen Teil (16) gegenüberliegt und sich außerhalb des Hohlkörpers (10) erstreckt, gebildet wird, wobei der zweite laterale Teil (18) die direkte Abstützung des Dachquerträgers (4) bildet.

2. Karosserieanordnung (100) nach Anspruch 1, **dadurch gekennzeichnet, dass** sie weiterhin mindestens ein Versteifungswinkelstück (22) aufweist, wobei jedes Winkelstück (22) einerseits mit dem Träger (18) des vorderen Dachquerträgers (4) und andererseits mit der einzigen Fensterholm- und Dachbogenauskleidung (8) fest verbunden ist.

3. Kraftfahrzeug (50), **dadurch gekennzeichnet, dass** es mindestens eine Karosserieanordnung (100) nach einem der vorhergehenden Ansprüche enthält.

4. Kraftfahrzeug (50) nach Anspruch 3, **dadurch gekennzeichnet, dass** es zwei Karosserieanordnungen (100), die jeweils auf jeder Seite des Fahrzeugs angeordnet sind, und einen vorderen Dachquerträger (4) enthält, wobei die beiden Anordnungen (100) durch den vorderen Dachquerträger (4) verbunden sind.
